# EUROPÄISCHE PATENTSCHRIFT

(11) **EP 2 589 239 B1**
(45) Veröffentlichungstag und Bekanntmachung des Hinweises auf die Patenterteilung: **01.03.2017**
(21) Anmeldenummer: 11724418.6
(22) Anmeldetag: 07.06.2011
(51) Int. Cl.: H04W 48/02

(54) **EINRICHTUNG UND VERFAHREN ZUR RÄUMLICH BEGRENZTEN BEOBACHTUNG UND BEEINFLUSSUNG DES EINSATZES VON KOMMUNIKATIONSENDEGERÄTEN**
DEVICE AND METHOD FOR OBSERVING, IN A SPATIALLY LIMITED MANNER, AND INFLUENCING THE USE OF COMMUNICATION TERMINALS
DISPOSITIF ET PROCÉDÉ PERMETTANT D'OBSERVER ET D'INFLUENCER DE MANIÈRE LIMITÉE DANS L'ESPACE L'UTILISATION DE TERMINAUX DE COMMUNICATION

(30) Priorität: 03.07.2010 DE 102010026039
(43) Veröffentlichungstag der Anmeldung: 08.05.2013
(73) Patentinhaber: Thales Defence Deutschland GmbH, 75175 Pforzheim (DE)
(72) Erfinder: KROKER, Jürgen, 75331 Engelsbrand (DE); GUNZELMANN, Georg, 75446 Wiernsheim (DE)
(74) Vertreter: DREISS Patentanwälte PartG mbB
(86) Internationale Anmeldenummer: PCT/EP2011/059344
(87) Internationale Veröffentlichungsnummer: WO 2012/004074

(56) Entgegenhaltungen:
- EP-A1- 1 917 821
- EP-A1- 2 107 637
- EP-A2- 1 051 053
- US-A1- 2003 083 043
- US-A1- 2010 159 879
- MCCORMACK J ET AL: "Experimental results of non-radiative calibration of a tower top adaptive array", ANTENNAS AND PROPAGATION, 2009. EUCAP 2009. 3RD EUROPEAN CONFERENCE ON, IEEE, PISCATAWAY, NJ, USA, 23. März 2009 (2009-03-23), Seiten 3389-3393, XP031470499, ISBN: 978-1-4244-4753-4

## Beschreibung

Die vorliegende Erfindung betrifft eine Einrichtung und ein Verfahren zur räumlich begrenzten Beobachtung und Beeinflussung des Einsatzes von Kommunikationsendgeräten eines zellulären Kommunikationsnetzes in einem zu überwachenden Bereich gemäß dem Oberbegriff des Anspruchs 1 bzw. dem Oberbegriff des Anspruchs 7.

Eine gattungsgemäße Einrichtung sowie ein gattungsgemäßes Verfahren kann den US 2003/ 0083043 A1, US 2010/159879 A1 und EP 1917821 B1 entnommen werden.

Aus dem Stand der Technik ist es bekannt, in sicherheitsrelevanten Bereichen, wie bspw. in Gefängnissen, auf Firmengeländen, in Kinos, Opern oder Theatern, Bundeswehrliegenschaften, Regierungsgebäuden oder auf dem Rollfeld eines Flugplatzes, sowie in öffentlichen Gebäuden, um nur einige Beispiele zu nennen, durch kontinuierliches bzw. intermittierendes Senden von Störsignalen die Nutzung von zellulären Kommunikationsendgeräten dauerhaft zu unterbinden. Als zelluläre Endgeräte kommen in Frage bspw.
- Mobilfunkgeräte al er gängigen Funknetze, wie z.B. GSM, UMTS, LTE,
- Funkgeräte, insbesondere wenn sie nach dem TETRA-Standard arbeiten,
- schnurlose Telefone, bspw. nach dem DECT-Standard, sowie
- beliebige andere E ndgeräte bspw. zur Kommunikation über WLAN (WiFi) oder WiMAX.

Dieses auch als Jarrmen bezeichnete Senden eines Störsignals führt jedoch zu dem Problem, dass auch berechtigte Personen, wie bspw. Sicherheitskräfte (Notarzt, Polizei, Feuerwehr, Sicherheitspersonal, etc.) in dem sicherheitsrelevanten Bereich ihr Kommunikationsendgerät nicht nutzen können. Zudem ist das Jammen mit einer relativ hohen Strahlenbelastung für in dem sicherheitsrelevanten Bereich befindliche Personen verbunden. Des Weiteren erfordert das Jammen einen sehr hohen und teuren Hardware-Aufwand, da einerseits eine vollflächige Abdeckung des sicherheitsrelevanten Bereichs mit dem Störsignal sichergestellt sein muss, andererseits aber sich das Störsignal aus Gründen der Zulässigkeit keinesfalls jenseits des sicherheitsrelevanten

Bereichs erstrecken darf. Schließlich sind die bekannten Verfahren zum Jammen sehr starr und nur mit erheblichem Aufwand skalierbar und auf neue Frequenzen oder neue Kommunikationsnetze erweiterbar.

Darüber hinaus sind aus dem Stand der Technik verschiedene Vorrichtungen und Verfahren zum Identifizieren und ggf. Abhören oder sonstigen Manipulieren von Mobilfunkendgeräten bekannt. So beschreibt bspw. EP 1 051 053 B1 eine solche Vorrichtung für den Einsatz im Umfeld eines GSM-Mobilfunknetzes. EP 1 917 821 B1 offenbart eine entsprechende für den Einsatz in UMTS-Mobilfunknetzen einsetzbare Vorrichtung. In den genannten Druckschriften wird ausführlich beschrieben, wie das Identifizieren von Endgeräten im Umfeld der entsprechenden Mobilfunknetze technisch funktioniert und wie die entsprechenden Mittel zur Identifikation der Endgeräte auszugestalten sind. Die bekannten Identifikationsmittel werden üblicherweise zum Orten (Lokalisieren) einer einzelnen verdächtigen Person (sofern sie ein Mobilfunkendgerät nutzt) und zum Abhören der von der Person mit dem Endgerät geführten Gespräche eingesetzt. Ziel ist es dabei, der Person eine möglichst normal erscheinende Mobilfunkinfrastruktur vorzugaukeln, damit die überwachte Person keinen Verdacht schöpft. Eine Unterbrechung eines von der Person geführten Telefongesprächs oder gar ein Unterbinden eines von der Person geführten Telefongesprächs muss dabei auf jeden Fall verhindert werden.

Ausgehend von dem beschriebenen Stand der Technik liegt der vorliegenden Erfindung die Aufgabe zugrunde, eine Möglichkeit zu schaffen, die Nachteile der aus dem Stand der Technik bekannten sog. Jammer zu vermeiden.

Diese Aufgabe wird durch eine Einrichtung und Verfahren zur räumlich begrenzten Beobachtung und Beeinflussung des Einsatzes von Kommunikationsendgeräten eines zellulären Kommunikationsnetzes wie in den Ansprüchen beansprucht gelöst.

Erfindungsgemäß wird also ein gegenüber dem bisherigen simplen Jammen von Endgeräten besonders intelligentes Verfahren zur Unterbindung der Nutzung von Endgeräten eines zellulären Kommunikationsnetzes in einem sicherheitsrelevanten Bereich vorgeschlagen. Das Verfahren verfügt über einen deutlichen Mehrwert gegenüber dem bekannten Jammen. Ein ganz wesentlicher Aspekt der Erfindung besteht darin, dass sämtliche in dem sicherheitsrelevanten Bereich betriebenen Endgeräte beobachtet und identifiziert werden. Das gilt für alle in dem überwachten Bereich aktiven, d.h. bei einer Basisstation angemeldeten Endgeräte, egal ob von ihnen aus ein Telefongespräch geführt oder über sie ein Gespräch empfangen wird oder nicht. Erst die Identifikation der Endgeräte erlaubt eine endgerätespezifische Beeinflussung des Einsatzes der in dem sicherheitsrelevanten Bereich betriebenen Kommunikationsendgeräte.

Im einfachsten Fall besteht die Beeinflussung eines identifizierten Endgeräts darin, dass der Betrieb des Endgeräts innerhalb des überwachten Bereichs komplett unterbunden wird. Der Nutzer des Endgeräts erhält bspw. die Information "kein Netz verfügbar", "Verbindungsaufbau nicht möglich" o.ä. auf seinem Endgerät angezeigt und/oder akustisch ausgegeben.

Darüber hinaus wäre es denkbar, dass der Betrieb des Endgeräts nur eingeschränkt möglich ist, bspw. indem über das Endgerät nur Gespräche zu bestimmten Rufnummern aufgebaut oder Gespräche von bestimmten Anrufernummern entgegengenommen werden können.

Auch das gezielte Zulassen eines vollfunktionalen Betriebs eines identifizierten Endgeräts in dem überwachten Bereich ist eine bestimmte Art von Manipulation des Endgeräts im Sinne der Erfindung. Außerdem wäre es denkbar, im Rahmen einer Manipulation eines Endgeräts die über das Endgerät geführten Telefongespräche abzuhören. Dies kann in Echtzeit erfolgen, oder aber nach der Aufzeichnung des Gesprächs kann es zu einem späteren Zeitpunkt abgehört werden. Zum Abhören der Gespräche können automatisierte Verfahren, bspw. in Form einer Spracherkennung, eingesetzt werden, die entweder das gesamte Gespräch in Text umwandeln, um die Weiterverarbeitung zu erleichtern, oder aber nur nach Schlüsselworten suchen, um dann entsprechende Maßnahmen (z.B. Weiterleiten des Gesprächs an übergeordnete Person zur genaueren Analyse, Manipulation des Endgeräts, o.ä.) einzuleiten. Die aufgezeichneten, über das Endgerät geführten Telefongespräche können später als gerichtsverwertbares Material herangezogen werden. Auch Verbindungsprotokolle für die in dem zu überwachenden Bereich benutzten Kommunikationsendgeräte lassen sich mit der vorliegenden Erfindung aufzeichnen und evtl. später verwerten.

Schließlich kann auch ein aktives Ansteuern des Endgeräts, auch ohne dass darüber ein Telefongespräch geführt wird, einer Manipulation des Endgeräts im Sinne der Erfindung entsprechen. Aufgrund der aktiven Ansteuerung könnte das Endgerät bspw. für den Nutzer unbemerkt gezielt zum Abhören der in Hörweite um das Endgerät befindlichen Personen genutzt werden.

Je nach verwendetem Mobilfunknetz, das heißt je nach verwendetem Standard, können die Identifikationsmittel unterschiedlich ausgebildet sein. Zum Identifizieren eines im GSM-Umfeld betriebenen Endgeräts könnten die Mittel bspw. gemäß EP 1 051 053 B1 ausgebildet sein. Für ein UMTS-Endgerät könnten die Identifikationsmittel bspw. gemäß EP 1 917 821 B1 ausgebildet sein. Entsprechend ausgestaltete Identifikationsmittel sind auch für andere zelluläre Kommunikationsstandards denkbar, insbesondere für, aber nicht beschränkt auf
- den kommenden Mobilfunkstandard der 4. Generation, bezeichnet als Long Term Evolution (LTE),
- Evolved UMTS Terrestrial Radio Access Network (E-UTRAN),
- High Speed OFDM (Orthogonal-Frequency-Division-Multiplexing) Packet Access (HSOPA),
- Super 3G oder 3.9G,
- den WiMAX (Worldwide Interoperability for Microwave Access)-Standard nach IEEE-Standard 802.16,
- beliebige Bündelfunk-Standards, insbesondere für digitalen Bündelfunk, wie bspw. den TETRA (TErrestrial Trunked RAdio, ursprünglich Trans European Trunked RAdio)-Standard, oder
- andere vergleichbare oder ähnliche Bündelfunk-Standards (z.B. Tetrapol, APCO 25, MPT-1327, Smartnet, Smartzone). Schließlich wäre es sogar denkbar, Identifikationsmittel für eine WLAN- oder eine DECT-Umgebung einzusetzen.

Die Hauptaufgabe der Identifikationsmittel besteht darin, den Nutzer eines Endgeräts bzw. das verwendete Endgerät eindeutig zu identifizieren. Die Identifikation muss dabei auch ohne Zugriff auf eventuell beim Provider vorgehaltene Konkordanzlisten, bspw. zwischen TMSI und IMSI, oder andere dort vorgehaltene Informationen bezüglich Nutzer und/oder verwendetem Endgerät, möglich sein, damit die Funktionsfähigkeit der erfindungsgemäßen Vorrichtung unabhängig vom Mobilfunk-Provider sichergestellt werden kann. Die Identifikationsmittel können die Identifikation des Nutzers bzw. des Endgeräts bspw. anhand der IMSI (International Mobile Subscriber Identity) und/oder der IMEI (International Mobile Equipment Identity) und/oder anhand anderer geeigneter Identifikationsparameter vornehmen.

Wichtig ist ferner, dass die Identifikationsmittel die Identifikation der Endgeräte in dem zu überwachenden Bereich über das Kommunikationsnetzwerk vornehmen. Dabei decken die Identifikationsmittel höchstens den zu überwachenden sicherheitsrelevanten Bereich ab, um sicherzustellen, dass außerhalb des Bereichs keine von den Identifikationsmitteln ausgehende, nennenswerte Funksignalleistung mehr messbar ist. Insbesondere sind die Identifikationsmittel derart ausgebildet, dass die von den Identifikationsmitteln ausgesandte Signalleistung außerhalb des überwachten Bereichs kleiner -110 dBm (dB bezogen auf Milliwatt) ist. Dies ist derzeit die Messgrenze gängiger Mobilfunkendgeräte. Bei Signalen unterhalb dieser Leistungsgrenze erkennen die Endgeräte kein Mobilfunknetz. Um sicher zu gehen, könnte die erzielte Leistungsgrenze außerhalb des zu überwachenden Bereichs auch auf -115 dBm verringert werden. Die angegebenen Zahlenwerte gelten nach derzeitigem Stand für GSM-Funknetze und wurden nur beispielhaft genannt. Es ist selbstverständlich, dass in anderen Funknetzen bzw. aufgrund von Änderungen der gesetzlichen Vorgaben, andere als die angegebenen Zahlenwerte gelten können.

Die Verarbeitungseinrichtung hat Zugriff auf eine Liste mit darin abgelegten Einträgen von Kommunikationsendgeräten bzw. Nutzern. Die Liste kann auf einer beliebigen internen Speichereinheit der Verarbeitungseinheit abgelegt sein. Alternativ kann die Liste auch in einer externen Speichereinheit abgelegt sein, auf welche die Verarbeitungseinheit über eine beliebige Kommunikationsverbindung, insbesondere über einen Datenbus oder über eine Internet-Verbindung, Zugriff hat. Die Liste kann ferner Bestandteil einer Datenbank sein, die über entsprechende Datenbankkontrolle verfügt, bspw. in Form einer von der Verarbeitungseinheit koordinierten Zugriffs- und Ablagesteuerung. Die in der Liste eingetragenen Endgeräte sind bspw. solche, deren Betrieb in dem zu überwachenden Bereich vollständig unterbunden, teilweise unterbunden oder vollständig erlaubt sein soll.

So wäre es am Beispiel eines Gefängnisses denkbar, dass die Liste Einträge der Endgeräte von Personen einer obersten Sicherheitsstufe (z.B. Gefängnisdirektor, Einsatzkräfte) enthält, deren Betrieb in vollem Umfang, d.h. mit voller Funktionalität und mit beliebigen Gesprächspartnern, erlaubt sein soll. Außerdem kann die Liste Einträge der Endgeräte von Personen einer niedrigeren Sicherheitsstufe (z.B. das übrige Gefängnispersonal) enthalten, deren Betrieb in beschränktem Umfang, d.h. mit beschränkter Funktionalität und/oder mit beschränktem Kreis an Gesprächspartnern (z.B. nur mit Kollegen, dem Gefängnisdirektor und den Einsatzkräften), erlaubt sein soll. Der Betrieb aller übrigen, in der Liste nicht aufgeführten Endgeräte kann unterbunden werden. Selbstverständlich ist es denkbar, eine viel feinere Unterteilung der in der Liste abgelegten Einträge der Endgeräte bzw. der entsprechenden Nutzer vorzunehmen. So ist es bspw. denkbar, in der Liste für jede mögliche Art von manipulativem Zugriff auf die Endgeräte eine eigene Gruppe einzurichten und darin die Einträge der entsprechenden Endgeräte bzw. der Nutzer abzulegen.

Die Verarbeitungseinheit steht mit den Identifikationsmitteln in Verbindung, damit Angaben über die identifizierten Endgeräte bzw. deren Nutzer an die Verarbeitungseinheit übertragen werden können. Dort werden sie mit den in der Liste abgelegten Einträgen von bestimmten Kommunikationsendgeräten bzw. Nutzern verglichen. In Abhängigkeit vom Ergebnis des Vergleichs wird der Einsatz eines oder mehrerer der identifizierten Endgeräte beeinflusst bzw. manipuliert oder nicht.

Das vollständige oder teilweise Inaktivieren oder eine sonstige Manipulation von ausgewählten Endgeräten kann bspw. über die Identifikationsmittel erfolgen. Die Endgeräte melden sich bei den Identifikationsmitteln an und übertragen dabei Identifikationsparameter an diese. Dies kann entweder automatisch bei Anmeldung des Endgeräts bei den Identifikationsmitteln oder nach ausdrücklicher Aufforderung durch die Identifikationsmittel erfolgen. Die Identifizierung der Endgeräte bzw. deren Nutzer erfolgt anhand der von dem Endgerät erhaltenen Identifikationsparameter.

Die vorliegende Erfindung hat gegenüber dem bekannten Jammen insbesondere folgende Vorteile:
- Die Erfindung ermöglicht einen besonders vielseitigen manipulativen Zugriff auf die in dem überwachten Bereich befindlichen Endgeräte. Diese können nicht nur blockiert werden, sondern bspw. unter Aufsicht vollumfänglich oder in beschränktem Umfang weiter betrieben werden. Sogar ein manipulativer Zugriff durch Ansteuerung von Endgeräten zum Betrieb der Endgeräte als Wanzen zum Abhören von in der Nähe der Endgeräte befindlichen Personen, auch ohne dass Telefongespräche über das Endgerät geführt werden, ist denkbar. Dadurch ergibt sich ein erheblicher Mehrwert gegenüber herkömmlichen Jammern.
- Die Erfindung ermöglicht für jedes der in dem überwachten Bereich befindlichen Endgeräte einen individualisierten manipulativen Zugriff. Dadurch ergibt sich eine große Flexibilität der Erfindung.
- Das Unterbinden der Nutzung der Endgeräte erfolgt nicht mittels gesundheitsschädlicher Störstrahlung, die den gesamten zu überwachenden Bereich abdecken muss. Vielmehr wird die Nutzung der Endgeräte mittels eines entsprechenden manipulativen Zugriffs über die Identifikationsmittel, bei denen die Endgeräte angemeldet sind, unterbunden.
- Die Erfindung ist besonders einfach skalierbar und kann zur Verarbeitung einer höheren Anzahl an Endgeräten erweitert werden. Außerdem kann die Erfindung einfach und kostengünstig auf geänderte technische Gegebenheiten angepasst werden, bspw. auf zusätzliche Mobilfunkfrequenzen, andere Mobilfunkstandards o.ä..
- Die Erfindung ist vielseitig einsetzbar und eignet sich für beliebige zu überwachende Bereiche, insbesondere für sicherheitsrelevante Bereiche, wie bspw. Gefängnisse, Liegenschaften von Privatfirmen oder Privatleuten, öffentliche Gebäude (Bundeswehrliegenschaften, Liegenschaften des Verteidigungsministeriums oder anderer Ministerien oder öffentlicher Gebäude, Flughafenrollfeld, mobile Feldlager in Krisengebieten, etc.). Auch ein Einsatz der Erfindung im zivilen Bereich, bspw. im Kino, in der Oper oder im Theater ist denkbar. Durch die Identifizierung der Endgeräte wäre es sogar möglich, die gegen ein Nutzungsverbot für Kommunikationsendgeräte verstoßenden Nutzer für die unerlaubte Nutzung ihres Endgeräts zu bestrafen.

Gemäß einer vorteilhaften Weiterbildung der Erfindung wird vorgeschlagen, dass die Identifikationsmittel mindestens eine virtuelle, derart betreibbare Basisstation umfassen, dass die in dem zu überwachenden Bereich betriebenen Kommunikationsendgeräte zur Anmeldung bei der virtuellen Basisstation veranlasst sind. Dies kann bspw. dadurch erzielt werden, dass den in dem überwachten Bereich betriebenen Endgeräten die Notwendigkeit eines Zellwechsels vorgetäuscht wird. Dies kann dadurch erreicht werden, dass die Signale der virtuellen Basisstation in dem zu überwachenden Bereich von den Endgeräten mit einer höheren Leistung empfangen werden als die Signale der umgebenden Basisstationen der Mobilfunk-Provider. Es wäre auch denkbar, dass die virtuelle Basisstation vorgibt, einer anderen Location Area anzugehören, so dass die Endgeräte einen Location Update ausführen und sich neu bei der virtuellen Basisstation anmelden. Die Location Area ist die aktuelle Aufenthaltsposition eines Mobiltelefons in einem Mobilfunknetz. Eine Location Area ist definiert durch die Location Area Identity (LAI), bestehend aus Mobile Country Code (MCC), Mobile Network Code (MNC) und Location Area Code (LAC, eine 2 Byte große Kennung) (also: LAI = MCC + MNC + LAC). Die neue Location Area kann dem Endgerät also bspw. durch einen neuen LAC mitgeteilt werden. Im Rahmen der Anmeldung der Endgeräte bei der virtuellen Basisstation übermitteln die Endgeräte Identifikationsparameter (z.B. IMSI, IMEI, TMSI) an die virtuelle Basisstation. Falls lediglich die TMSI übermittelt wird, wie dies in der Regel in UMTS-Mobilfunknetzen der Fall ist, kann die Basisstation das oder die Endgeräte aktiv zur Übermittlung der IMSI auffordern.

Gemäß einer bevorzugten Ausführungsform der vorliegenden Erfindung wird ferner vorgeschlagen, dass die Identifikationsmittel Richtantennen umfassen, die zueinander beabstandet am äußeren Rand des zu überwachenden Bereichs mit in den Bereich hinein gerichteter Abstrahlrichtung angeordnet sind. Durch die Verwendung von Richtantennen zum Senden und/oder Empfangen von Funksignalen wird sichergestellt, dass die Signale nur in eine definierte Hauptrichtung abgestrahlt werden, wobei die Signale natürlich mit einer gewissen Streuung ausgesandt werden, so dass sich insgesamt eine kegelförmige Abstrahlung ergibt. Durch die Anordnung der Richtantennen am äußeren Rand des zu überwachenden Bereichs bzw. des für die Überwachung interessanten Bereichs mit nach innen in den Bereich gerichteter Hauptabstrahlrichtung wird sichergestellt, dass hinter den Antennen, also entgegengesetzt zur Hauptabstrahlrichtung keine Funksignale ausgesandt werden. Selbstverständlich können an anderen Stellen des zu überwachenden Bereichs, insbesondere in einem Abstand zu dem äußeren Rand des Bereichs, weitere Richtantennen oder herkömmliche rundum abstrahlende Antennen angeordnet sein, um eine flächendeckende Abdeckung des Bereichs mit Funksignalen, bspw. im Inneren von Gebäuden, sicherzustellen. Auch für diese zusätzlichen Antennen muss jedoch gelten, dass sie keine messbaren Signale außerhalb des zu überwachenden Bereichs abstrahlen dürfen.

Es ist denkbar, dass der für die Überwachung interessierende Bereich kleiner als der zu überwachende Bereich ist. Die Strahlbündel der Richtantennen können den interessierenden Bereich etwas überschreiten, ohne dass dadurch der zu überwachende Bereich überschritten wird. Der Abschnitt zwischen dem interessierenden Bereich und dem zu überwachenden Bereich bildet also eine Art Pufferzone, in welche die Signale reichen können, in der aber keine Überwachung gefordert ist.

Es wird ferner vorgeschlagen, dass von den Richtantennen in Abstrahlrichtung ausgesandte Signale eine Reichweite von höchstens 2/3 des Abstands der Richtantennen zu einem in Abstrahlrichtung jeweils gegenüberliegenden Punkt des zu überwachenden Bereichs aufweisen. Die Signalleistung der Richtantennen wird also so gewählt, dass die ausgesandten Funksignale nicht bis zum gegenüberliegenden Rand des zu überwachenden Bereichs reichen, da sonst die Gefahr besteht, dass in bestimmten Betriebssituationen auch außerhalb des zu überwachenden Bereichs Funksignale der virtuellen Basisstation gemessen werden können, was gemäß den Anforderungen der Bundesnetzagentur unzulässig wäre. Mit dieser Weiterbildung wird also sichergestellt, dass selbst bei besonders guten Übertragungsbedingungen die von den Antennen ausgesandten Signale niemals den gegenüberliegenden Rand des zu überwachenden Bereichs erreichen oder diesen sogar überschreiten. Auch in diesem Fall kann die Reichweite der Funksignale so definiert werden, dass die Reichweite an der Stelle zu Ende ist, wo die Signalleistung bspw. unter -110 dBm bzw. sogar -115 dBm fällt. Selbstverständlich sind auch hier andere Zahlenwerte denkbar.

Die Reichweite der von den Richtantennen der Identifikationsmittel ausgesandten Funksignale kann in Abhängigkeit von verschiedenen Faktoren relativ starken Schwankungen unterworfen sein. Ein möglicher Faktor kann die Wetterlage, insbesondere die Luftfeuchtigkeit sein. Um unabhängig von äußeren Faktoren stets eine konstante Sendeleistung in dem zu überwachenden Bereich zu erreichen wird eine Regelung der Sendeleistung der Identifikationsmittel vorgeschlagen (sog. 1. Regelungsansatz). Zu diesem Zweck weisen die Identifikationsmittel erste Sensoren zum Erfassen der Leistung der von den Richtantennen ausgesandten Signale auf, und die Verarbeitungseinheit regelt die Leistung der von den Richtantennen ausgesandten Signale auf einen vorgebbaren Wert. Falls zusätzliche Antennen in einem Abstand zum äußeren Rand des zu überwachenden Bereichs vorgesehen sind, können diese selbstverständlich auch in die Regelung der Eigenstrahlung einbezogen werden. Die Sensoren sind vorzugsweise über den zu überwachenden Bereich verteilt angeordnet. Der vorgebbare Wert für die Regelung der Sendeleistung der Eigenstrahlung kann ein vorgegebener konstanter Wert oder ein veränderbarer Wert sein.

Denkbar ist bspw. dass der vorgebbare Wert (Sollwert) für die Regelung der Sendeleistung der Eigenstrahlung in Abhängigkeit von der Leistung von Fremdsignalen, also von Funksignalen, die von außerhalb des zu überwachenden Bereichs angeordneten Basisstationen der Provider abgestrahlt werden, verändert wird. Auch ohne eine Regelung der Sendeleistung der Identifikationsmittel nach dem 1. Reglungsansatz ist es möglich, die Leistung der von den Richtantennen und sonstigen Antennen der Identifikationsmittel ausgesandten Funksignale in Abhängigkeit von der Leistung von Fremdsignalen zu regeln (sog. 2. Regelungsansatz). Dabei kommt es insbesondere darauf an, dass in dem gesamten zu überwachenden Bereich die von den Antennen der Identifikationsmittel ausgesandten Signale eine größere Leistung aufweisen als die Mobilfunksignale, die von außerhalb des Bereichs angeordneten Antennen der Netzwerk-Provider in den zu überwachenden Bereich vordringen. Das ist wichtig, damit die in dem zu überwachenden Bereich angeordneten Endgeräte stets bei den Identifikationsmitteln angemeldet bleiben und sich nicht etwa bei einer außerhalb des Bereichs angeordneten Basisstation eines regulären Netzwerk-Providers anmelden. Zu diesem Zweck wird vorgeschlagen, dass die Identifikationsmittel zweite Sensoren zum Erfassen der Leistung von externen Signalen aufweisen, die von Antennen von außerhalb des zu überwachenden Bereichs angeordneten externen Basisstationen ausgesandt werden, und die Verarbeitungseinheit die Leistung der von den Richtantennen ausgesandten Signale in Abhängigkeit von der Signalleistung der von den Antennen der externen Basisstationen ausgesandten externen Signale auf einen vorgebbaren Wert regelt. Der vorgebbare Wert für die Regelung der Strahlungsleistung in Abhängigkeit von der Fremdstrahlung kann ein vorgegebener konstanter Wert oder ein veränderbarer Wert sein.

Weitere Merkmale und Vorteile der vorliegenden Erfindung werden nachfolgend unter Bezugnahme auf die Figuren näher erläutert. Es zeigen:
Figur 1 ein Beispiel für einen mittels der erfindungsgemäßen Einrichtung zu überwachenden Bereich in Form eines Gefängnisses in perspektivischer Ansicht;
Figur 2 ein weiteres Beispiel für einen mittels der erfindungsgemäßen Einrichtung zu überwachenden Bereich in Form eines Gefängnisses in einer Draufsicht; und
Figur 3 eine schematische Ansicht einer virtuellen Funkzelle der Identifikationsmittel einer erfindungsgemäßen Einrichtung.

Die vorliegende Erfindung schlägt eine Einrichtung und ein Verfahren zur räumlich begrenzten Beobachtung und Beeinflussung des Einsatzes von Kommunikationsendgeräten eines zellulären Funkkommunikationsnetzes in einem zu überwachenden Bereich vor. Dabei handelt es sich um eine besonders intelligente Art der Beeinflussung der in dem Bereich befindlichen Endgeräte, die nicht auf ein Jammen der Endgeräte durch Aussenden eines oder mehrerer Störsignale abzielt, sondern einen konkreten Mehrwert gegenüber den bekannten Systemen bietet. Das erfindungsgemäße System kann in beliebigen Bereichen eingesetzt werden, wo Einfluss auf den Einsatz von mobilen Kommunikationsgeräten genommen werden soll, insbesondere in
- Gefängnissen,
- öffentlichen Gebäuden (z.B. Kino, Theater, Oper),
- Regierungsgebäuden (z.B. Bundestag, Bundeskanzleramt, Ministerien), oder in
- militärischen Bereichen (z.B. Kasernen, Truppenübungsplätzen, Feldlagern).

Die Beeinflussung der Endgeräte umfasst insbesondere
- ein komplettes Unterbinden der Nutzung,
- eine beschränkte Nutzung (beschränkter Funktionsumfang der Endgeräte, bspw. keine Möglichkeit SMS zu senden oder zu empfangen, und/oder beschränkter Personenkreis, der Kommunikationsverbindungen unterhalten kann und mit dem solche unterhalten werden können), oder
- eine unbeschränkte Nutzung.

Mit der Erfindung können sämtliche über die in dem überwachten Bereich identifizierten Endgeräte geführten Gespräche abgehört, aufgezeichnet und ggf. ausgewertet werden. Die Beeinflussung der Endgeräte kann für jedes in dem Bereich identifizierte Endgerät individuell vorgenommen werden.

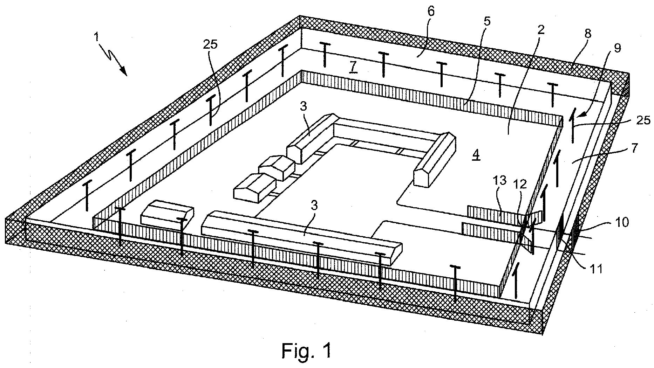

Figur 1 zeigt einen zu überwachenden Bereich am Beispiel eines Gefängnisses 1 in perspektivischer Ansicht. Selbstverständlich kann die Erfindung auch in beliebig anderen mehr oder weniger sicherheitsrelevanten Bereichen eingesetzt werden. Das Gefängnis 1 umfasst ein Gelände 2, auf dem ein Gefängnisgebäudekomplex 3 angeordnet ist. Im Inneren des Gefängnisgebäudekomplexes 3 befinden sich bspw. Verwaltungsräume (z.B. Arbeitszimmer, Aufenthaltsräume des Personals), Gemeinschaftsräume für die Gefangenen (z.B. Kantine, Freizeiträume, Krankenstation) sowie Gefängniszellen. Außerhalb des Gebäudekomplexes 3, aber noch auf dem Gefängnisgelände 2 ist ein für die Gefangenen zumindest zeitweise bzw. teilweise zugänglicher erster Bereich 4 durch einen Sicherheitszaun 5 abgegrenzt. Das Gefängnisgelände 2 entspricht dem zu überwachenden Bereich. Da sich Gefangene und andere Personen aber eigentlich nur in dem ersten Bereich 4 aufhalten dürfen, ist das der für die Überwachung interessante Bereich. Es genügt also völlig die Überwachung auf den ersten Bereich 4 zu beschränken. Ein zweiter Bereich außerhalb des Sicherheitszauns 5 kann, muss aber nicht überwacht werden.

Außerhalb des Sicherheitszauns 5 verläuft eine Gefängnismauer 6. Die Mauer 6 kann Wachtürme und/oder einen Wehrgang zur besseren Beobachtung der Gefangenen in dem ersten Bereich 4 bzw. eines Außenbereichs jenseits des Gefängnisgeländes 2 aufweisen. Der Sicherheitszaun 5 und die Gefängnismauer 6 sind in einem Abstand zueinander angeordnet, so dass dazwischen ein zweiter Bereich 7 ausgebildet ist, der sich vorzugsweise außen um den ersten Bereich 4 und das Gefängnisgebäude 3 erstreckt. In dem zweiten Bereich 7 können besondere Fluchtverhinderungsmittel vorgesehen sein, wie bspw. eine Lichtsperre mittels mehrerer Laternen 9 (helle Ausleuchtung des zweiten Bereichs 7), ein Spurensicherungsstreifen im Ausleuchtbereich der Lichtsperre, Hundelaufanlagen, ein berührungssensitiver Signalzaun, etc. Außen um die Gefängnismauer 6 herum kann in einem Abstand zu dieser ein Wildzaun 8 verlaufen. Der Zaun 8 begrenzt das Gefängnisgelände 2. Über eine Zufahrt ist durch Tore 10, 11, 12 in dem Wildzaun 8, der Mauer 6 und dem Sicherheitszaun 5 sowie durch eine Sicherheitsschleuse 13 ein Zugang bzw. eine Zufahrt zu dem Gebäudekomplex 3 möglich.

Ein großes Problem in Gefängnissen 1 und anderen sicherheitsrelevanten Bereichen ist die unerlaubte Nutzung von Kommunikationsendgeräten von zellulären Kommunikationssystemen, wie bspw. eines Mobilfunknetzes. Dabei besteht bspw. die Gefahr, dass über die Endgeräte Informationen an unberechtigte Dritte weitergeleitet werden (z.B. Spionage), mit Dritten kriminelle Aktionen geplant werden (z.B. Ausbruch aus dem Gefängnis, Schmuggel von verbotenen Gegenständen in das Gefängnis, kriminelle Aktionen außerhalb des Gefängnisses) oder über das Endgerät eine ferngesteuerte Bombe gezündet wird. Aus diesem Grund ist es bekannt, in Gefängnissen 1 oder anderen zu überwachenden Bereichen eine Einrichtung zur auf den überwachten Bereich räumlich begrenzten Beobachtung und Beeinflussung des Einsatzes von Kommunikationsendgeräten eines zellulären Kommunikationsnetzes einzusetzen. Bei diesem sog. Jammen werden von Störsendern einfach Störsignale ausgesendet, durch die in Reichweite der Störsignale befindliche Endgeräte blockiert werden und deren Nutzung somit unmöglich wird.

Gemäß der vorliegenden Erfindung wird vorgeschlagen, statt des Jammens die in einem interessierenden Überwachungsbereich 4 befindlichen Kommunikationsendgeräte auf
- intelligente Weise individuell zu manipulieren, bspw. ein Endgerät vollständig oder teilweise zu blockieren,
- über das Endgerät geführte Telefongespräche abzuhören oder
- das Endgerät derart anzusteuern, dass es für den Nutzer unbemerkt als Wanze zum Abhören des Umfelds des Endgeräts genutzt werden kann.

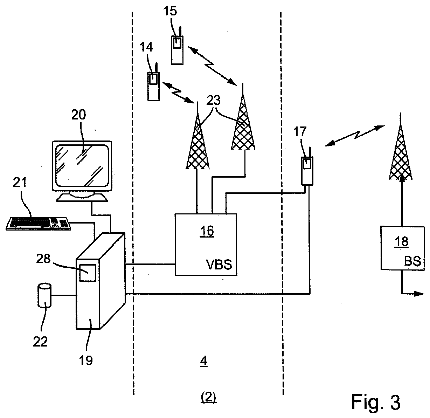

Zu diesem Zweck verfügt die erfindungsgemäße Einrichtung, wie sie beispielhaft in Figur 3 dargestellt ist, über Mittel zur Identifikation der in dem Überwachungsbereich 4 betriebenen Endgeräte 14, 15 bzw. deren Nutzer vermittels des zellulären Kommunikationssystems.

Die Identifikationsmittel werden umgangssprachlich auch als IMSI-Catcher bezeichnet. Die Identifikation der Endgeräte 14, 15 bzw. deren Nutzer erfolgt anhand von Identifikationsparametern, insbesondere der IMSI, der IMEI oder ähnlicher Parameter, die eine eindeutige Identifikation von Endgerät 14, 15 bzw. dessen Nutzer ermöglichen. Derartige Identifikationsmittel sind an sich aus dem Stand der Technik bekannt. So beschreibt bspw. EP 1 051 053 B1 Identifikationsmittel für ein GSM-Mobilfunknetz im Detail in Aufbau und Funktion. Entsprechende Identifikationsmittel für ein UMTS-Mobilfunknetz sind in Aufbau und Funktion detailliert in EP 1 917 821 B1 beschrieben. Auf die genannten Druckschriften wird ausdrücklich Bezug genommen. Der Inhalt dieser Druckschriften soll hinsichtlich des Aufbaus und der Funktionsweise der Identifikationsmittel zum Bestandteil der vorliegenden Beschreibung gemacht werden. Selbstverständlich können die Identifikationsmittel für andersartige Kommunikationssysteme (nicht GSM- oder UMTS-Mobilfunknetze) anders ausgestaltet sein.

Die hier eingesetzten Identifikationsmittel für die Identifizierung von Endgeräten 14, 15 eines Mobilfunknetzes umfassen mindestens eine virtuelle Basisstation 16 sowie mindestens ein Test-Endgerät 17. Die Basisstationen sowie die Test-Endgeräte sind auf den Standard der zu überwachenden Kommunikationssysteme (z.B. GSM, UMTS, TETRA, etc.) bzw. die zu überwachenden Frequenzen ausgerichtet. Über das Test-Endgerät 17 werden Betriebsparameter von im Umfeld des zu überwachenden Bereichs 2 befindlichen herkömmlichen Basisstationen 18 von Mobilfunk-Providern ermittelt. Mit Hilfe der ermittelten Betriebsparameter kann die mindestens eine virtuelle Basisstation 16 betrieben werden als sei sie Bestandteil des zu überwachenden Kommunikationssystems. Die virtuelle Basisstation 16 wird insbesondere derart betrieben, dass alle im interessierenden überwachten Bereich 4 befindlichen Endgeräte 14, 15 zur Anmeldung bei der virtuellen Basisstation 16 veranlasst sind. Dies kann bspw. dadurch erfolgen, dass die virtuelle Basisstation 16 mit einem anderen LAC und/oder einer höheren Leistung sendet als die umgebenden Basisstationen 18 des/der Provider(s). Infolgedessen führen die im Überwachungsbereich 4 betriebenen Endgeräte 14, 15 einen Location-Update aus, wobei sie sich bei der vermeintlich neuen Basisstation 16 anmelden.

Im Rahmen der Anmeldung der überwachten Endgeräte 14, 15 bei der virtuellen Basisstation 16 übermitteln diese in GSM-Mobilfunknetzen automatisch zumindest einen Teil ihre Identifikationsparameter an die virtuelle Basisstation, welche unmittelbar eine eindeutige Identifikation des Endgeräts 14, 15 bzw. dessen Nutzers ermöglichen. In UMTS-Mobilfunknetzen übermitteln die Endgeräte 14, 15 bei der Anmeldung üblicherweise lediglich eine temporäre IMSI, die sog. TMSI, die ohne Zugriff auf beim Provider abgespeicherte Zuordnungsinformationen zwischen TMSI und IMSI keine eindeutige Identifikation des Endgeräts 14, 15 bzw. dessen Nutzers erlaubt. Aus diesem Grund weist im UMTS-Mobilfunknetz die virtuelle Basisstation 16 die anmeldungswilligen Endgeräte 14, 15 ab und fordert diese aktiv auf, zur Identifikation geeignete Parameter, insbesondere die IMSI und/oder die IMEI, an die Basisstation 16 zu übermitteln.

Bei den anderen eingangs erwähnten Netzzugangstechnologien werden deren Protokolle genutzt, um geeignete Identifikationsparameter zu erhalten.

Anhand der von den Endgeräten 14, 15 empfangenen Identifikationsparameter kann in der virtuellen Basisstation 16 oder einer daran angeschlossenen Auswerteeinheit 19 eine eindeutige Identifikation des Endgeräts 14, 15 bzw. dessen Nutzers vorgenommen werden. Die Auswerteeinheit 19 kann als ein herkömmlicher Personal Computer ausgebildet sein, auf dem eine geeignete Software zur Ansteuerung des mindestens einen Test-Endgeräts 17 und der mindestens einen virtuellen Basisstation 16 sowie zur Auswertung der Identifikationsparameter und zur Identifikation der Endgeräte 14, 15 bzw. deren Nutzer abläuft. Die Auswerteeinheit 19 verfügt vorzugsweise über Ausgabemittel 20, bspw. in Form eines Bildschirms oder eines Druckers, über Eingabemittel 21, bspw. in Form einer Tastatur oder eines Zeigegeräts (Maus, Trackball, Touchpad etc.), sowie über vorzugsweise nicht-flüchtigen Speicher (z.B. Festplatte) und Datenbanksoftware.

In der Auswerteeinheit 19 kann auch eine Verarbeitungseinheit 28 der erfindungsgemäßen Einrichtung zumindest funktional integriert sein, welche die manipulativen Maßnahmen gegen die identifizierten Endgeräte 14, 15 koordiniert. Die Verarbeitungseinheit 28 ist bspw. in Form einer auf der Auswerteeinheit 19 ablaufenden Software realisiert. Selbstverständlich wäre es auch denkbar, die Verarbeitungseinheit 28 als eine von der Auswerteeinheit 19 separate Einheit, bspw. als separaten Personal Computer, auszubilden, die mit der Auswerteeinheit 19 zum Datenaustausch über eine leitungsgebundene oder drahtlose Datenverbindung in Verbindung steht, insbesondere über einen Datenbus. Die Verarbeitungseinheit 28 erhält von der Auswerteeinheit 19 Informationen über die identifizierten Endgeräte 14, 15 bzw. deren Nutzer. Die manipulativen Zugriffe auf die Endgeräte 14, 15 erfolgen von der Verarbeitungseinheit 28 koordiniert entweder unmittelbar über die virtuelle Basisstation 16 oder mittelbar über die Auswerteeinheit 19, die ihrerseits dann die Basisstation 16 entsprechend instruiert.

Über die Eingabemittel 21 können bspw. die Identifikationsparameter von zu überwachenden Endgeräten 14, 15 bzw. deren Nutzer in die Verarbeitungseinheit 28 eingegeben werden. Ebenso ist es denkbar, über die Eingabemittel 21 die Identifikationsparameter von Endgeräten bzw. deren Nutzer (z.B. Personal, Rettungskräfte) einzugeben, die in dem zu überwachenden Bereich 2 benutzt werden dürfen. Diese Informationen zu den Endgeräten 14, 15 bzw. deren Nutzer können als Liste in einer Datenbank 22 o.ä. abgelegt werden, auf welche die Auswerteeinheit 19 und/oder die Verarbeitungseinheit 28 Zugriff hat. Auf den Ausgabemitteln 20 können die identifizierten Endgeräte 14, 15, sowie zusätzlichen Informationen zu diesen ausgegeben werden. Die zusätzlichen Informationen umfassen bspw. die Position der Endgeräte 14, 15, deren aktuellen Status (z.B. angemeldet und im Standby, angemeldet mit laufendem Gespräch) sowie Informationen über den Manipulationsstatus der Endgeräte 14, 15 (z.B. wird blockiert, beschränkte Funktionalität, Gespräch wird abgehört). Selbstverständlich können auch andere Informationen ausgegeben werden. Außerdem ist es denkbar, Verbindungsprotokolle der identifizierten Endgeräte 14, 15 zu erstellen und zur späteren Verwendung, bspw. zu Beweiszwecken, in der Datenbank 22 abzuspeichern. Schließlich ist es auch denkbar, die abgehörten Gespräche als Audiodatei oder nach einer manuellen oder automatischen Spracherkennung als Textdatei in der Datenbank 22 abzuspeichern. All diese Maßnahmen werden von der Verarbeitungseinheit 28 koordiniert.

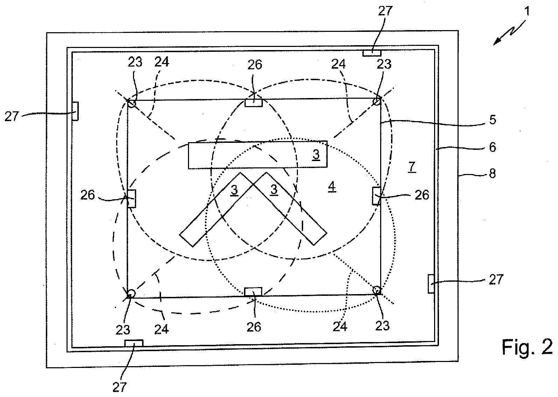

In dem Ausführungsbeispiel aus Figur 2 sind die Identifikationsmittel zumindest teilweise innerhalb des zu überwachenden Bereichs 2, insbesondere innerhalb des interessierenden Bereichs 4, angeordnet. Dies gilt im eigentlichen Sinne nur für die Richt- und sonstigen Antennen 23 bzw. die mindestens eine virtuelle Basisstation 16. Die Auswerteeinheit 19 der Identifikationsmittel sowie die Verarbeitungseinheit 28 der erfindungsgemäßen Einrichtung können ebenfalls in dem zu überwachenden Bereich 2 angeordnet sein, bspw. in einem Sicherheitsraum des Gefängnisses 1, in dem auch die Videoüberwachung des Gefängnisgeländes 2 und das übrige Gebäudemanagement (z.B. Heizung, ferngesteuertes Öffnen von Toren, Türen und Fenstern, Branderkennung, Brandbekämpfung, Notfallmanagement, etc.) erfolgen kann. In dem Beispiel aus Figur 2 sind sie jedoch außerhalb des interessierenden Bereichs 4, insbesondere außerhalb des zu überwachenden Bereichs 2, bspw. in einer außerhalb des Gefängnisgeländes 2 befindlichen Steuerungszentrale, angeordnet. Das Test-Endgerät 17 ist vorzugsweise an den Rändern des Überwachungsbereichs 4 bzw. des zu überwachenden Bereichs 2 angeordnet. In dem Beispiel aus Figur 2 ist es außerhalb des interessierenden Bereichs 4 angeordnet, bspw. an der Gefängnismauer 6 oder knapp außerhalb des Gefängnisgeländes 2.

Zum Aussenden und Empfangen von Signalen umfassen die Identifikationsmittel Antennen 23, die zumindest teilweise als Richtantennen ausgebildet sind. In dem zweiten Bereich 7 zwischen Gefängnismauer 6 und Sicherheitszaun 5 (einschließlich Mauer 6 und Zaun 5) sind zueinander beabstandet mehrere Richtantennen 23 angeordnet, deren Hauptabstrahlrichtungen 24 in den zu überwachenden Bereich 2 hinein, insbesondere in etwa auf das Zentrum des ersten Bereichs 4, gerichtet sind (vgl. Figur 2). Die Richtantennen 23 sind in dem Beispiel aus Figur 2 an Eckpfosten des Sicherheitszauns 5 angeordnet. Je nach Größe, Form und geographischen Gegebenheiten (Berge, Täler, Wälder) des zu überwachenden Bereichs 2 können auch weniger oder mehr als die vier gezeigten Richtantennen 23 eingesetzt werden. Die Richtantennen 23 sind alle mindestens einer der virtuellen Basisstationen 16 der Identifikationsmittel zugeordnet. Sie können Signale von den im Überwachungsbereich 4 betriebenen Endgeräten 14, 15 empfangen (z.B. Identifikationsparameter, Gesprächsdaten) sowie Signale an die Endgeräte 14, 15 aussenden (z.B. Aufforderung zur Übermittlung der Identifikationsparameter, Gesprächsdaten).

Die Sendeleistung der Richtantennen 23 ist so gewählt, dass die Reichweite der von einer Richtantenne 23 jeweils ausgesandten Funksignale geringer als der Abstand zu dem in der Hauptabstrahlrichtung 24 der Richtantenne 23 liegenden Teil der Gefängnismauer 6 auf der anderen Seite des Gefängnisgebäudes 3 ist. Insbesondere ist die Reichweite der von einer Richtantenne 23 ausgesandten Funksignale kleiner als 2/3 des Abstands zu dem in der Hauptabstrahlrichtung 24 der Richtantenne 23 liegenden Teil der Gefängnismauer 6. Dort wo die Signalleistung der ausgesandten Funksignale die Messgrenze von herkömmlichen mobilen Kommunikationsendgeräten, insbesondere von Mobiltelefonen, unterschritten hat, wird im Sinne der vorliegenden Erfindung von der Grenze der Reichweite gesprochen. Die Messgrenze liegt bspw. für ein GSM-Mobilfunknetz derzeit bei höchstens -110 dBm (dB bezogen auf Milliwatt), insbesondere bei -115 dBm. Selbstverständlich können die Zahlenwerte von den angegebenen Werten, bspw. für andere Mobilfunkstandards oder nach einer Gesetzesänderung, auch von den angegebenen Zahlenwerten abweichen. Die absolute Sendeleistung der Richtantennen 23 beträgt in der Regel nur wenige Watt oder liegt sogar im Milliwatt-Bereich.

Die Richtantennen 23 in dem dargestellten Ausführungsbeispiel senden in Hauptabstrahlrichtungen 24, die im Wesentlichen auf das Zentrum des Gefängnisses 1 gerichtet sind, Signalbündel mit einem Öffnungswinkel von ca. 90° aus. Ein solcher Öffnungswinkel ist in dem dargestellten Ausführungsbeispiel besonders vorteilhaft, da die Richtantennen 23 genau an den Ecken des rechteckigen Sicherheitszauns 5 angeordnet sind. Wären noch auf den Längs- oder Querseiten des Sicherheitszauns 5 oder an anderer Stelle im zweiten Bereich 7 entlang der Längs- oder Querseiten des Gefängnisses 1 weitere Richtantennen 23 angeordnet, wäre es vorteilhaft, wenn diese einen Öffnungswinkel von ca. 180° aufweisen. Ebenso wäre für bestimmte Anwendungsfälle ein Öffnungswinkel des von den Richtantennen 23 ausgesandten Signalbündels von weniger als 90° denkbar. Schließlich ist es auch denkbar, dass verteilt auf dem Gefängnisgelände 2 weitere Antennen, herkömmliche rundum abstrahlende Antennen oder ebenfalls Richtantennen, angeordnet sind, die ebenfalls der mindestens einen virtuellen Basisstation 16 der Identifikationsmittel zugeordnet sind. Dadurch kann eine flächendeckende und zuverlässige Versorgung des gesamten für die Überwachung interessierenden Bereichs 4 mit einer ausreichenden Signalstärke sichergestellt werden. Die virtuelle Funkzelle in dem Überwachungsbereich 4 wird also durch eine sektorisierte virtuelle Basisstation 16 gebildet.

Durch die gebündelte und in eine Hauptabstrahlrichtung 24 gerichtete Abstrahlcharakteristik der Richtantennen 23 sowie die reduzierte Sendeleistung und die daraus resultierende reduzierte Reichweite der ausgesandten Funksignale wird sichergestellt, dass die von den Richtantennen 23 ausgesandten Sendesignale nicht außerhalb des Gefängnisgeländes 2, das heißt außerhalb der Gefängnismauer 6 bzw. sofern vorhanden des Wildzauns 8 gelangen können bzw. dort unterhalb der Messgrenze von herkömmlichen Endgeräten, insbesondere unter -110 dBm, vorzugsweise sogar unter -115 dBm, liegen. Ein wichtiger Aspekt der vorliegenden Erfindung besteht in einer ausreichend starken und möglichst den gesamten interessierenden Überwachungsbereich 4 abdeckenden signaltechnischen Ausleuchtung des zu überwachenden Bereichs 2, ohne dass jedoch die Signale der virtuellen Basisstation 16 außerhalb des Gefängnisgeländes 2 zu Störungen des Kommunikationsbetriebs in den Mobilfunknetzen der Provider führen. Durch die Sektorisierung der virtuellen Basisstation 16, die Verwendung von Richtantennen 23, eine geeignete Wahl der Abstrahlcharakteristik und der Montagepositionen der Richtantennen 23 sowie eine reduzierte Sendeleistung der Richtantennen 23 können die Vorgaben der Bundesnetzagentur mit möglichst geringem Aufwand, kostengünstig, sicher und zuverlässig erfüllt werden. Zudem wird durch die Erfindung ein deutlicher Mehrwert gegenüber dem üblichen Jammen erzielt, weil die in dem überwachten Bereich 4 identifizierten Endgeräte 14, 15 individuell, auf vielfältige Weise manipuliert werden können. Insbesondere können Telefongespräche abgehört und Verbindungsprotokolle erstellt werden.

Die Richtantennen 23 sind vorzugsweise an der Innenseite der Gefängnismauer 6, an im zweiten Bereich 7 angeordneten Masten, bspw. an Wachturm- oder Lichtmasten 25 (vgl. Figur 1). In dem Ausführungsbeispiel aus Figur 2 sind sie an Eckpfeilern des Sicherheitszauns 5 befestigt. Zum Schutz vor Witterungseinflüssen und/oder Sabotageangriffen sind die Richtantennen 23 vorzugsweise in einem Gehäuse, insbesondere einem Kunststoffgehäuse, bspw. aus GFK (glasfaserverstärkter Kunststoff), angeordnet. GFK ist weitgehend durchlässig für Funksignale und besonders widerstandsfähig gegen Witterungseinflüsse, insbesondere Feuchtigkeit und UV-Strahlung. Die Gehäuse sind farblich auf die Teile abgestimmt, an denen die Richtantennen 23 befestigt sind, z.B. der Farbe der Gefängnismauer 6 oder der Farbe von Wachturm- oder Lichtmasten 25, um die Richtantennen 23 für den Betrachter, insbesondere für die zu überwachenden Zielpersonen, das heißt die Nutzer von nicht autorisierten Kommunikationsendgeräten 14, 15, optisch unauffällig zu gestalten.

Wie aus Figur 2 ersichtlich, sind auf dem Gefängnisgelände 2, bspw. am Rand des zu überwachenden Bereichs 4, mehrere Sensoren 26 zum Erfassen der Sendeleistung der von den Antennen 23 der mindestens einen virtuellen Basisstation 16 ausgesandten Funksignale vorgesehen. In dem dargestellten Beispiel sind die Sensoren 26 an dem Sicherheitszaun 5 befestigt. Selbstverständlich können sie auch an einer beliebig anderen Stelle auf dem Gefängnisgelände 2 bzw. dem für die Überwachung interessierenden Bereich 4 angeordnet sein. Durch das Erfassen der Eigenstrahlungsleistung ist es möglich, die Sendeleistung der Richtantennen 23 so zu regeln, dass an bestimmten Messpunkten die Leistung der empfangbaren (von den Richtantennen 23 ausgesandten) Signale unabhängig von Witterungs- oder sonstigen Einflüssen einen vorgebbaren Sollwert hat (sog. 1. Regelungsansatz). Dies ist wichtig, um sicherzustellen, dass in dem interessierenden Bereich 4 die Funksignale der virtuellen Basisstation 16 stets stärker sind als die von den außerhalb des überwachten Bereichs 2 angeordneten Basisstationen 18 der Provider ausgesandten Funksignale und die in dem interessierenden Bereich 4 befindlichen Endgeräte 14, 15 sich bei der virtuellen Basisstation 16 anmelden bzw. dort angemeldet bleiben.

Alternativ oder zusätzlich sind auf dem Gefängnisgelände 2, bspw. in dem zweiten Bereich 7 zwischen dem Sicherheitszaun 5 und der Gefängnismauer 6, mehrere Sensoren 27 zum Erfassen der Sendeleistung der von den Antennen der externen Basisstationen 18 der Provider ausgesandten Funksignale vorgesehen. In dem dargestellten Beispiel sind die Sensoren 27 an der Gefängnismauer 6 befestigt. Selbstverständlich können sie auch an einer beliebig anderen Stelle auf dem Gefängnisgelände 2 angeordnet sein. Durch das Erfassen der Fremdstrahlungsleistung ist es möglich, die Sendeleistung der Richtantennen 23 der virtuellen Basisstation 16 in Abhängigkeit von der Stärke der von den Antennen der externen Basisstationen 18 ausgesandten und in dem für die Überwachung interessanten Bereich 4 bzw. dem Gefängnisgelände 2 empfangbaren externen Funksignale zu regeln (sog. 2. Regelungsansatz). Dadurch kann sichergestellt werden, dass die Leistung der von den Richtantennen 23 der virtuellen Basisstation 16 ausgesandten Signale in möglichst jedem Punkt des zu überwachenden Bereichs 4 unabhängig von Witterungs- oder sonstigen Einflüssen stets um einen vorgebbaren Sicherheitsbetrag höher ist als die Leistung der in dem Bereich 4 empfangbaren, von den Antennen der externen Basisstationen 18 der Provider ausgesandten Fremdsignale. Das ist Voraussetzung dafür, dass die in dem zu überwachenden Bereich 4 befindlichen Endgeräte 14, 15 sich bei der virtuellen Basisstation 16 anmelden bzw. dort angemeldet bleiben. Durch die Messung der Fremdstrahlungsleistung kann der Sollwert des oben beschriebenen 2. Regelungsansatzes in Abhängigkeit von der Sendeleistung der Antennen der externen Basisstationen 18 ermittelt und vorgegeben werden. Der Sollwert ergibt sich bspw. aus der Summe der gemessenen Fremdleistung zuzüglich eines vorgebbaren Sicherheitsbetrags.

Durch außerhalb des überwachten Bereichs 4 bzw. am Rand des Gefängnisgeländes 2 angeordnete Sensoren 26 bzw. 27 könnte auch die Leistung der das Gefängnisgelände 2 verlassenden, von den Antennen 23 der virtuellen Basisstation 16 ausgesandten Funksignale gemessen werden und die Sendeleistung der virtuellen Basisstation 16 gegebenenfalls angepasst werden, um einerseits die Vorgaben der Bundesnetzagentur einzuhalten und andererseits mit der größtmöglichen Leistung zu senden.

Der Überwachungsbereich 4 entspricht dem Teil des Gefängnisgeländes 2, wo sich Gefangene aufhalten dürfen. In dem Überwachungsbereich 4 ist eine lückenlose und flächendeckende Abdeckung mit Funksignalen der mindestens einen virtuellen Basisstation 16 sichergestellt. Lediglich der Überwachungsbereich 4 des Gefängnisgeländes 2 muss also von den Funksignalen der virtuellen Basisstationen 16 abgedeckt sein. In den Bereich außerhalb des Gefängnisgeländes 2 dürfen dagegen keine Funksignalen der virtuellen Basisstationen 16 gelangen. Der zweite Bereich 7 zwischen dem Sicherheitszaun 5 und der Mauer 6 kann als signaltechnische Pufferzone genutzt werden, in welche die von der mindestens einen virtuellen Basisstation 16 ausgesandte Funksignale zwar noch gelangen können bzw. dürfen, wo aber keine flächendeckende Überwachung der Endgeräteaktivitäten gefordert ist. Auf diese Weise kann die Forderung einfacher und mit höherer Sicherheit erfüllt werden, wonach in dem zu überwachenden Bereich 4 eine flächendeckende Abdeckung mit den von der mindestens einen virtuellen Basisstation 16 ausgesandten Funksignalen zu gewährleisten ist (Erfordernis einer zuverlässigen, flächendeckenden Überwachung aller Endgeräte 14, 15 in dem Überwachungsbereich 4) und gleichzeitig sicherzustellen ist, dass die Funksignale der mindestens einen virtuellen Basisstation 16 das Gefängnisgelände 2 nicht verlassen (Anforderung der Bundesnetzagentur).

Durch die Regelung der Sendeleistung in Abhängigkeit von der Eigen- und/oder Fremdstrahlungsleistung kann die Strahlenbelastung für Personen im Überwachungsbereich 4 der erfindungsgemäßen Einrichtung auf ein Minimum reduziert werden, da die Sendeleistung der virtuellen Basisstation 16 gerade so hoch geregelt wird, dass sich die im Bereich 4 befindlichen Endgeräte 14, 15 bei der virtuellen Basisstation 16 anmelden.

Ein wichtiger Aspekt der vorliegenden Erfindung besteht darin sicherzustellen, dass einerseits zumindest der zu überwachende Bereich 4 des Gefängnisgeländes 2 flächendeckend von den Funksignalen der Antennen 23 der virtuellen Basisstation 16 mit ausreichender Signalstärke abgedeckt ist und andererseits aber die von den Antennen 23 der virtuellen Basisstation 16 ausgesandten Funksignale das Gefängnisgelände 2 nicht verlassen bzw. dort so schwach sind, dass eine Störung der Kommunikation von außerhalb des Geländes 2 befindlichen Endgeräten über die Kommunikationssysteme der Provider nicht zu befürchten ist bzw. technisch nicht nachweisbar oder messbar ist.

## Patentansprüche

1. Einrichtung zur räumlich begrenzten Beobachtung und Beeinflussung des Einsatzes von Kommunikationsendgeräten (14, 15) eines zellulären Kommunikationsnetzes in einem zu überwachenden Bereich (2), umfassend:
- den zu überwachenden Bereich (2) abdeckende Mittel (16, 17, 19, 23) zur Identifikation der in dem Bereich (2) betriebenen Kommunikationsendgeräte (14, 15) bzw. deren Nutzer über das zelluläre Kommunikationssystem,
- wobei die Identifikationsmittel (16, 17, 19, 23) mindestens eine virtuelle Basisstation (16) umfassen, die derart ausgebildet ist, dass in dem zu überwachenden Bereich (2) betriebene Kommunikationsendgeräte (14, 15) zur Anmeldung bei der virtuellen Basisstation (16) veranlasst sind, wobei die virtuelle Basisstation (16) derart ausgebildet ist, dass in dem zu überwachenden Bereich (2) betriebene Kommunikationsendgeräte (14, 15) zur Anmeldung bei der virtuellen Basisstation (16) veranlasst sind, indem Signale der virtuellen Basisstation (16) von den in dem zu überwachenden Bereich (2) betriebenen Kommunikationsendgeräten (14, 15) mit einer höheren Leistung empfangen werden als externe Signale von externen Basisstationen (18) von Mobilfunk-Providern oder indem die virtuelle Basisstation (16) vorgibt, einer anderen Location Area anzugehören, so dass die in dem zu überwachenden Bereich (2) betriebenen Endgeräte (14, 15) ein Location Update ausführen, eine mit den Identifikationsmitteln (16, 17, 19, 23) in Verbindung stehende Verarbeitungseinheit (28), welche dazu ausgebildet ist, Angaben über die identifizierten Kommunikationsendgeräte (14, 15) bzw. deren Nutzer mit in einer Liste abgelegten Einträgen von Kommunikationsendgeräten bzw. Nutzern zu vergleichen und in Abhängigkeit vom Ergebnis des Vergleichs den Einsatz eines oder mehrerer der identifizierten Endgeräte (14, 15) zu beeinflussen oder nicht, dass die Einrichtung Sensoren zum Erfassen einer Leistung von externen Signalen, die von Antennen von außerhalb des zu überwachenden Bereichs (2) angeordneten externen Basisstationen (18) des Kommunikationsnetzes des Mobilfunk-Providers ausgesandt werden, aufweist und dass die Verarbeitungseinheit (28) dazu ausgebildet ist, während der Beobachtung und Beeinflussung des Einsatzes von in dem zu überwachenden Bereich angeordneten Kommunikationsendgeräten eine Sendeleistung der mindestens einen virtuellen Basisstation (16) in Abhängigkeit von der erfassten Leistung der externen Signale einzustellen.

2. Einrichtung nach Anspruch 1, **dadurch gekennzeichnet, dass** die Identifikationsmittel (16, 17, 19, 23) Richtantennen (23) umfassen.

3. Einrichtung nach Anspruch 2, **dadurch gekennzeichnet, dass** die Richtantennen (23) zueinander beabstandet am äußeren Rand des zu überwachenden Bereichs (2) mit in den Bereich (2) hinein gerichteter Abstrahlrichtung (24) angeordnet sind.

4. Einrichtung nach Anspruch 2 oder 3, **dadurch gekennzeichnet, dass** von den Richtantennen (23) in Abstrahlrichtung (24) ausgesandte Signale eine Reichweite von höchstens 2/3 des Abstands der Richtantennen (23) zu einem in Abstrahlrichtung (24) jeweils gegenüberliegenden Punkt des zu überwachenden Bereichs (2) aufweisen.

5. Einrichtung nach einem der Ansprüche 2 bis 4, **dadurch gekennzeichnet, dass** die Identifikationsmittel (16, 17, 19, 23) erste Sensoren (26) zum Erfassen der Leistung der von den Richtantennen (23) ausgesandten Signale aufweisen und die Verarbeitungseinheit (28) die Leistung der von den Richtantennen (23) ausgesandten Signale auf einen vorgebbaren Soll-Wert regelt.

6. Einrichtung nach einem der Ansprüche 2 bis 5, **dadurch gekennzeichnet, dass** die Identifikationsmittel (16, 17, 19, 23) zweite Sensoren (27) zum Erfassen der Leistung der externen Signale aufweisen und die Verarbeitungseinheit (28) die Leistung der von den Richtantennen (23) ausgesandten Signale in Abhängigkeit von der Signalleistung der von den Antennen der externen Basisstationen (18) ausgesandten externen Signale auf einen vorgebbaren Soll-Wert regelt.

7. Verfahren zur räumlich begrenzten Beobachtung und Beeinflussung des Einsatzes von Kommunikationsendgeräten (14, 15) eines zellulären Kommunikationsnetzes in einem zu überwachenden Bereich (2), wobei
- Mittel (16, 17, 19, 23) zur Identifikation der in dem zu überwachenden Bereich (2) betriebenen Kommunikationsendgeräte (14, 15) bzw. deren Nutzer über das zelluläre Kommunikationsnetz derart ausgestaltet und angeordnet werden, dass sie den zu überwachenden Bereich (2) abdecken, und Angaben über die identifizierten Kommunikationsendgeräte (14, 15) bzw. deren Nutzer an eine Verarbeitungseinheit (28) weiterleiten, und
- die Identifikationsmittel (16, 17, 19, 23) mindestens eine virtuelle Basisstation (16) umfassen, die derart betrieben wird, dass die in dem zu überwachenden Bereich (2) betriebenen Kommunikationsendgeräte (14, 15) zur Anmeldung bei der virtuellen Basisstation (16) veranlasst werden, indem Signale der virtuellen Basisstation (16) von den in dem zu überwachenden Bereich (2) betriebenen Kommunikationsendgeräten (14, 15) mit einer höheren Leistung empfangen werden als externe Signale von externen Basisstationen (18) von Mobilfunk-Providern oder indem die virtuelle Basisstation (16) vorgibt, einer anderen Location Area anzugehören, so dass die in dem zu überwachenden Bereich (2) betriebenen Endgeräte (14, 15) ein Location Update, wobei die Verarbeitungseinheit (28) die Angaben über die identifizierten Kommunikationsendgeräte (14, 15) bzw. deren Nutzer mit in einer Liste abgelegten Einträgen von Kommunikationsendgeräten bzw. Nutzern vergleicht und in Abhängigkeit vom Ergebnis des Vergleichs den Einsatz eines oder mehrerer der identifizierten Endgeräte (14, 15) beeinflusst oder nicht, dass eine Leistung von externen Signalen, die von Antennen von außerhalb des zu überwachenden Bereichs (2) angeordneten externen Basisstationen (18) des Kommunikationsnetzes des Mobilfunk-Providers ausgesandt werden, von Sensoren erfasst wird und dass eine Sendeleistung der mindestens einen virtuellen Basisstation (16) während der Beobachtung und Beeinflussung des Einsatzes von in dem zu überwachenden Bereich (2) angeordneten Kommunikationsendgeräten (14, 15) in Abhängigkeit von der erfassten Leistung der externen Signale eingestellt wird.

8. Verfahren nach Anspruch 7, **dadurch gekennzeichnet, dass** Richtantennen (23) der Identifikationsmittel (16, 17, 19, 23) zueinander beabstandet am äußeren Rand des zu überwachenden Bereichs (2) mit in den Bereich (2) hinein gerichteter Abstrahlrichtung (24) angeordnet werden.

9. Verfahren nach Anspruch 7 oder 8, **dadurch gekennzeichnet, dass** Richtantennen (23) der Identifikationsmittel (16, 17, 19, 23) derart betrieben werden, dass von den Richtantennen (23) in Abstrahlrichtung (24) ausgesandte Signale eine Reichweite von höchstens 2/3 eines Abstands der Richtantennen (23) zu einem in Abstrahlrichtung (24) jeweils gegenüberliegenden Punkt des zu überwachenden Bereichs (2) aufweisen.

10. Verfahren nach einem der Ansprüche 7 bis 9, **dadurch gekennzeichnet, dass** die Verarbeitungseinheit (28) die Leistung der von Richtantennen (23) der Identifikationsmittel (16, 17, 19, 23) ausgesandten Signale in Abhängigkeit von der an dedizierten Messstandorten gemessenen Ist-Signalleistung der von den Richtantennen (23) ausgesandten Signale auf einen vorgebbaren Soll-Wert regelt.

11. Verfahren nach einem der Ansprüche 7 bis 10, **dadurch gekennzeichnet, dass** die Verarbeitungseinheit (28) die Leistung der von Richtantennen (23) der Identifikationsmittel (16, 17, 19, 23) ausgesandten Signale in Abhängigkeit von einer gemessenen Ist-Signalleistung von externen Signalen, die von Antennen von externen Basisstationen (18) ausgesandt werden, auf einen vorgebbaren Soll-Wert regelt.

## Claims

1. An apparatus for spatially defined observing and influencing the use of communications terminal devices (14, 15) of a communications network in an area to be monitored (2), including:
- means (16, 17, 19, 23), covering the area to be monitored (2), for identification of the communications terminal devices (14, 15) operated in the area (2) or of their users via the communications system,
- wherein the identification means (16, 17, 19, 23) include at least one virtual base station (16), which is embodied in such a way that communications terminal devices (14, 15), operated in the area to be monitored (2), are made to register with the virtual base station (16), and
wherein the virtual base station (16) is embodied such that communications terminal devices (14, 15) operated in the area to be monitored (2) are made to register with the virtual base station (16), in that signals of the virtual base station (16) from the communications terminal devices (14, 15) operated in the area to be monitored (2) are received at a higher power than external signals from external base stations (18) of mobile radio providers, or in that the virtual base station (16) pretends to belong to a different location area, so that the terminal devices (14, 15) operated in the area to be monitored (2) execute a location update, a processing unit (28), in communication with the identification means (16, 17, 19, 23), which is embodied for comparing information about the identified communications terminal devices (14, 15) or their users with data sets, stored in a list containing information regarding communications terminal devices or users, and for influencing one or more of the identified terminal devices (14, 15), or not, as a function of the outcome of the comparison; wherein the apparatus has sensors for detecting a power of external signals that have been emitted by antennas of external base stations (18) of the communications network of the mobile radio provider that are located outside the area to be monitored (2); and wherein the processing unit (28) is embodied for adjusting a transmission power, during the observation and influencing of the use of communications terminal devices located in the area to be monitored, of the at least one virtual base station (16) as a function of the detected power of the external signals.

2. The apparatus of claim 1, **characterized in that** the identification means (16, 17, 19, 23) include directional antennas (23).

3. The apparatus of claim 2, **characterized in that** the directional antennas (23) are spaced apart from one another on the outer periphery of the area to be monitored (2) with a broadcasting direction (24) aimed into the area (2).

4. The apparatus of claim 2 or 3, **characterized in that** signals emitted in the broadcasting direction (24) by the directional antennas (23) have a range of at most 2/3 of the distance of the directional antennas (23) from a respective opposed point, in the broadcasting direction (24), of the area to be monitored (2).

5. The apparatus of one of claims 2 through 4, **characterized in that** the identification means (16, 17, 19, 23) have first sensors (26) for detecting the power of the signals emitted by the directional antennas (23), and the processing unit (28) regulates the power of the signals emitted by the directional antennas (23) to a predeterminable set-point value.

6. The apparatus of one of claims 2 through 5, **characterized in that** the identification means (16, 17, 19, 23) have second sensors (27) for detecting the power of the external signals, and the processing unit (28) regulates the power of the signals emitted by the directional antennas (23) to a predeterminable set-point value as a function of the signal power of the external signals emitted by the antennas of the external base stations (18).

7. A method for spatially defined observing and influencing the use of communications terminal devices (14, 15) of a communications network in an area to be monitored (2), wherein
- means (16, 17, 19, 23) for identification of the communications terminal devices (14, 15) operated in the area (2) or of their users via the communications network are embodied and located in such a way that they cover the area to be monitored (2) and forward information about the identified communications terminal devices (14, 15) or their users to a processing unit (28), and
- the identification means (16, 17, 19, 23) include at least one virtual base station (16), which is operated such that the communications terminal devices (14, 15) operated in the area to be monitored (2) are made to register with the virtual base station (16), in that signals of the virtual base station (16) from the communications terminal devices (14, 15) operated in the area to be monitored (2) are received with a higher power than external signals from external base stations (18) of mobile radio providers, or in that the virtual base station (16) pretends to belong to a different location area, so that the terminal devices (14, 15) operated in the area to be monitored (2) execute a location update,
- and the processing unit (28) compares the information about the identified communications terminal devices (14, 15) or their users with data sets, stored in a list containing information regarding communications terminal devices or users, and as a function of the outcome of the comparison either influences or does not influence the use of one or more of the terminal devices (14, 15) identified; wherein a power of external signals which are emitted by antennas, located outside the area to be monitored (2), of external base stations (18) of the communications network of the mobile radio provider is detected by sensors; and wherein a transmission power of the at least one virtual base station (16) is adjusted, during the observation and influence of the use of communications terminal devices (14, 15), located in the area to be monitored (2), as a function of the detected power of the external signals.

8. The method of claim 7, **characterized in that** directional antennas (23) of the identification means (16, 17, 19, 23) are spaced apart from one another on the outer periphery of the area to be monitored (2), with a broadcasting direction (24) aimed into the area (2).

9. The method of claim 7 or 8, **characterized in that** directional antennas (23) of the identification means (16, 17, 19, 23) are operated in such a way that signals emitted by the directional antennas (23) in the broadcasting direction (24) have a range of at most 2/3 of a distance of the directional antennas (23) from a respective opposite point, in the broadcasting direction (24), of the area to be monitored (2).

10. The method of one of claims 7 through 9, **characterized in that** the processing unit (28) regulates the power of the signals emitted by directional antennas (23) of the identification means (16, 17, 19, 23) as a function of the actual signal power, measured at dedicated measurement locations, of the signals emitted by the directional antennas (23) to a predeterminable set-point value.

11. The method of one of claims 7 through 10, **characterized in that** the processing unit (28) regulates the power of the signals emitted by directional antennas (23) of the identification means (16, 17, 19, 23) as a function of a measured actual signal power of external signals which are emitted by antennas of external base stations (18) to a predeterminable set-point value.

## Revendications

1. Dispositif destiné à observer et à influencer de manière limitée dans l'espace l'utilisation de terminaux de communication (14, 15) d'un réseau de communication cellulaire dans une zone à surveiller (2), comprenant:
- des moyens (16, 17, 19, 23) couvrant la zone à surveiller (2) et destinés à identifier les terminaux de communication (14, 15) fonctionnant dans la zone (2) ou bien les utilisateurs de ceux-ci par le biais du système de communication cellulaire,
- dans lequel les moyens d'identification (16, 17, 19, 23) comprennent au moins une station de base virtuelle (16) qui est réalisée de telle manière que des terminaux de communication (14, 15) fonctionnant dans la zone à surveiller (2) sont incités à se connecter à la station de base virtuelle (16), dans lequel ladite station de base virtuelle (16) est réalisée de telle sorte que des terminaux de communication (14, 15) fonctionnant dans la zone à surveiller (2) sont incités à se connecter à la station de base virtuelle (16) par le fait que des signaux de la station de base virtuelle (16) sont reçus par les terminaux de communication (14, 15) fonctionnant dans la zone à surveiller (2), avec une puissance supérieure à celle de signaux externes provenant de stations de base (18) externes de fournisseurs de téléphonie mobile, ou par le fait que la station de base virtuelle (16) détermine d'appartenir à une autre zone de localisation de sorte que les terminaux (14, 15) fonctionnant dans la zone à surveiller (2) exécutent une mise à jour de localisation, une unité de traitement (28) qui est en communication avec lesdits moyens d'identification (16, 17, 19, 23) et qui est conçue pour comparer des informations relatives aux terminaux de communication (14, 15) identifiés ou bien à leurs utilisateurs, à des entrées de terminaux de communication ou bien d'utilisateurs faites dans une liste et pour influencer ou non, en fonction du résultat de la comparaison, l'utilisation d'un ou de plusieurs des terminaux (14, 15) identifiés, que le dispositif présente des capteurs destinés à détecter une puissance de signaux externes qui sont émis par des antennes de stations de base externes (18) du réseau de communication du fournisseur de téléphonie mobile qui sont disposées à l'extérieur de la zone à surveiller (2), et que ladite unité de traitement (28) est conçue pour ajuster, durant l'observation de et l'influence sur l'utilisation de terminaux de communication (14, 15) disposés dans la zone à surveiller, une puissance d'émission de ladite au moins une station de base virtuelle (16) en fonction de la puissance détectée des signaux externes.

2. Dispositif selon la revendication 1, **caractérisé par le fait que** lesdits moyens d'identification (16, 17, 19, 23) comprennent des antennes directives (23).

3. Dispositif selon la revendication 2, **caractérisé par le fait que** les antennes directives (23) sont disposées à distance les unes des autres sur le bord extérieur de la zone à surveiller (2), avec une direction d'émission (24) orientée dans la zone (2).

4. Dispositif selon la revendication 2 ou 3, **caractérisé par le fait que** des signaux émis par les antennes directives (23) dans la direction d'émission (24) présentent une portée faisant tout au plus 2/3 de la distance séparant les antennes directives (23) et un point de la zone à surveiller (2) qui est respectivement opposé dans la direction d'émission (24).

5. Dispositif selon l'une quelconque des revendications 2 à 4, **caractérisé par le fait que** les moyens d'identification (16, 17, 19, 23) présentent de premiers capteurs (26) de détection de la puissance des signaux émis par les antennes directives (23), et que ladite unité de traitement (28) règle la puissance des signaux émis par les antennes directives (23) à une valeur de consigne prédéterminable.

6. Dispositif selon l'une quelconque des revendications 2 à 5, **caractérisé par le fait que** les moyens d'identification (16, 17, 19, 23) présentent de deuxièmes capteurs (27) de détection de la puissance des signaux externes, et que ladite unité de traitement (28) règle la puissance des signaux émis par les antennes directives (23) à une valeur de consigne prédéterminable, en fonction de la puissance de signal des signaux externes émis par les antennes des stations de base externes (18).

7. Procédé destiné à observer et à influencer de manière limitée dans l'espace l'utilisation de terminaux de communication (14, 15) d'un réseau de communication cellulaire dans une zone à surveiller (2), dans lequel
- des moyens (16, 17, 19, 23) destinés à identifier les terminaux de communication (14, 15) fonctionnant dans la zone à surveiller (2) ou bien les utilisateurs de ceux-ci par le biais du réseau de communication cellulaire sont configurés et disposés de telle manière qu'ils couvrent la zone à surveiller (2), et des informations relatives aux terminaux de communication (14, 15) identifiés ou bien à leurs utilisateurs sont transmises à une unité de traitement (28), et
- lesdits moyens d'identification (16, 17, 19, 23) comprennent au moins une station de base virtuelle (16) qui est opérée de telle manière que les terminaux de communication (14, 15) fonctionnant dans la zone à surveiller (2) sont incités à se connecter à la station de base virtuelle (16) par le fait que des signaux de la station de base virtuelle (16) sont reçus par les terminaux de communication (14, 15) fonctionnant dans la zone à surveiller (2), avec une puissance supérieure à celle de signaux externes provenant de stations de base (18) externes de fournisseurs de téléphonie mobile, ou par le fait que la station de base virtuelle (16) détermine d'appartenir à une autre zone de localisation de sorte que les terminaux (14, 15) fonctionnant dans la zone à surveiller (2) exécutent une mise à jour de localisation, dans lequel ladite unité de traitement (28) compare les informations relatives aux terminaux de communication (14, 15) identifiés ou bien à leurs utilisateurs, à des entrées de terminaux de communication ou bien d'utilisateurs faites dans une liste et influence ou non, en fonction du résultat de la comparaison, l'utilisation d'un ou de plusieurs des terminaux (14, 15) identifiés, qu'une puissance de signaux externes qui sont émis par des antennes de stations de base externes (18) du réseau de communication du fournisseur de téléphonie mobile qui sont disposées à l'extérieur de la zone à surveiller (2) est détectée par des capteurs et qu'une puissance d'émission de ladite au moins une station de base virtuelle (16) est ajustée, durant l'observation de et l'influence sur l'utilisation de terminaux de communication (14, 15) disposés dans la zone à surveiller (2), en fonction de la puissance détectée des signaux externes.

8. Procédé selon la revendication 7, **caractérisé par le fait que** des antennes directives (23) des moyens d'identification (16, 16, 19, 23) sont disposées à distance les unes des autres sur le bord extérieur de la zone à surveiller (2), avec une direction d'émission (24) orientée dans la zone (2).

9. Procédé selon la revendication 7 ou 8, **caractérisé par le fait que** des antennes directives (23) des moyens d'identification (16, 16, 19, 23) sont opérées de telle sorte que des signaux émis par les antennes directives (23) dans la direction d'émission (24) présentent une portée faisant tout au plus 2/3 d'une distance séparant les antennes directives (23) et un point de la zone à surveiller (2) qui est respectivement opposé dans la direction d'émission (24).

10. Procédé selon l'une quelconque des revendications 7 à 9, **caractérisé par le fait que** ladite unité de traitement (28) règle la puissance des signaux émis par des antennes directives (23) des moyens d'identification (16, 17, 19, 23) à une valeur de consigne prédéterminable, en fonction de la puissance de signal réelle des signaux émis par les antennes directives (23), qui est mesurée à des emplacements de mesure dédiés.

11. Procédé selon l'une quelconque des revendications 7 à 10, **caractérisé par le fait que** ladite unité de traitement (28) règle la puissance des signaux émis par des antennes directives (23) des moyens d'identification (16, 17, 19, 23) à une valeur de consigne prédéterminable, en fonction d'une puissance de signal réelle mesurée de signaux externes qui sont émis par des antennes de stations de base externes (18).
